# EUROPEAN PATENT APPLICATION

(11) **EP 3 101 891 A1**
(43) Date of publication of application: **07.12.2016**
(21) Application number: 15170709.8
(22) Date of filing: 04.06.2015
(51) Int. Cl.: H04N 7/10, H03F 3/62

(54) **ANTENNA OUTLET SOCKET WITH SELECTABLE UPSTREAM BANDWIDTH**

(71) Applicant: Triax A/S, 8783 Hornsyld (DK)
(72) Inventor: Rotboell, Jesper, 8722 Hedensted (DK); Werner, Stefan, 78052 Villingen-Schwenningen (DE)
(74) Representative: Inspicos P/S

(57) **Abstract**

The present invention relates to an outlet socket adapted to provide signals in an upstream and a downstream direction, the outlet socket comprising a manually operable switch, wherein the manually operable switch, when in a first position, configures the outlet socket to provide a first upstream bandwidth, and wherein the manually operable switch, when in a second position, configures the outlet socket to provide a second upstream bandwidth, the second upstream bandwidth being increased relative to the first upstream bandwidth. The increased second upstream bandwidth is established by providing sufficient attenuation of the upstream data signals on the FM radio and/or TV plug.

## Description

### FIELD OF THE INVENTION

The present invention relates to an outlet socket that offers a manually selectable upstream bandwidth. In particular, the present invention relates to a wall-mounted antenna outlet socket.

### BACKGROUND OF THE INVENTION

GB 2 513 657 A relates to a cable TV amplifier comprises a so-called level detector. If this level detector senses the presence of upstream signals above a specified frequency, for example above 65 MHz, a couple of switches are automatically operated in order to select diplexer filters suitable for bidirectional operation with a higher frequency upstream signal.

The self-adapting solution suggested in GB 2 513 657 A is a rather sophisticated and expensive solution to a relative simple problem, namely to select a suitable bandwidth in the upstream direction.

The solution suggested in GB 2 513 657 A needs a power supply. However, such power supply is not available in antenna outlets sockets.

It may be seen as an object of embodiments of the present invention to provide a simple, cost efficient and future safe antenna outlet sockets, such as wall-mounted antenna outlet sockets.

It may be seen as a further object of embodiments of the present invention to provide an antenna outlet socket having a selectable or variable upstream bandwidth.

It may be seen as an even further object of embodiments of the present invention to provide an antenna outlet socket, where the upstream bandwidth are selected or varied using a powerless arrangement, i.e. no electrical power is required.

### DESCRIPTION OF THE INVENTION

The above-mentioned objects are complied with by providing an outlet socket adapted to provide signals in an upstream and a downstream direction, the outlet socket comprising a manually operable switch, wherein the manually operable switch, when in a first position, configures the outlet socket to provide a first upstream bandwidth, and wherein the manually operable switch, when in a second position, configures the outlet socket to provide a second upstream bandwidth, the second upstream bandwidth being increased relative to the first upstream bandwidth.

The increased second upstream bandwidth may change, such as reduce, the available downstream bandwidth for FM radio and/or TV too. A more detailed discussion of this will be provided below.

Thus, the present invention relates to an outlet socket, such as a wall-mounted antenna outlet socket, where the upstream bandwidth may be set or selected using a manually operable switch.

It is advantageous that outlet sockets according to the present invention are configurable and therefore comply with for example Docsis 3.1.

As addressed above, the second upstream bandwidth may be provided by reducing the downstream bandwidth. This reduction of the downstream bandwidth may be provided by blocking at least a portion of the downstream bandwidth using appropriate filters which are switched into the downstream path. According to the present invention such appropriate filters may be switched into the FM radio and/or TV downstream path in order to block and thereby reduce the downstream bandwidth. Thus, by blocking portions of the FM radio band and/or the TV band an increased upstream bandwidth may be provided, and, as in this case, the upstream signals are sufficiently attenuated at the FM radio and/or the TV plug.

For comparison, the first upstream bandwidth may include the 5-65 MHz band, whereas the second upstream bandwidth may comprise the 5-204 MHz band. It should be noted however, that the second upstream bandwidth may be selected differently.

The manually operable switch may comprise a mechanical switch, such as a slidable or a rotatable switch. Alternatively, the manually operable switch may comprise one or more moveable jumpers. Finally, the manually operable switch may be operated or controlled by an arrangement being incorporated in a connector or plug being adapted to be inserted into an output terminal of the outlet socket, such as a coaxial radio output terminal.

The second and increased upstream bandwidth may be selected among a plurality of upstream frequency bands, such as among at least four frequency bands. To be more specific the second frequency band may be between 5 and 400 MHz, such as between 5 and 85 MHz, such as between 5 and 108 MHz, such as between 5 and 204 MHz. Obviously, other upstream frequency bands may be applicable as well.

### BRIEF DESCRIPTION OF THE DRAWINGS

The present invention will now be described in further details with reference to the accompanying figures, wherein
- Fig. 1: illustrates an example of prior art bandwidths,
- Fig. 2: illustrates an increase upstream bandwidth, and
- Fig. 3: shows a block diagram of the electronics of an antenna outlet socket.

While the invention is susceptible to various modifications and alternative forms specific embodiments have been shown by way of examples in the drawings and will be described in details herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

Generally the present invention relates to an antenna outlet socket for providing both upstream and downstream signals. The upstream signals are typically data signals, whereas the downstream signals typically include data, FM radio and TV signals. Such FM radio and TV signals are typically provided in preselected frequency bands including for example 87-108 MHz for FM radio signals and 120-862 MHz for TV signals. Care must be taken to ensure proper isolation of the FM radio/TV signals from the upstream signals.

Downstream data signals are typically provided within or above the frequency band for TV signals, whereas upstream data signals typically are limited to the 5-65 MHz frequency band. As addressed above the present invention aims at increasing the upstream bandwidth from typically 65 MHz to perhaps 85 MHz or 204 MHz or even more in order to fully comply with the Docsis 3.1 capacity, cf. Table 1.

**Table 1**

| | **Migration to Docsis 3.1** | |
|---|---|---|
| | **Phase 1** | **Phase 2** |
| Downstream (radio/TV) | 85 - 1218 MHz | 258 - 1800 MHz |
| Upstream (data) | 5 - 65 MHz | 5 - 204 MHz |

Regarding the above-mentioned isolation between the upstream and downstream bands Phase 2 of the Docsis 3.1 provides a 54 MHz isolation band between the upstream and downstream bands.

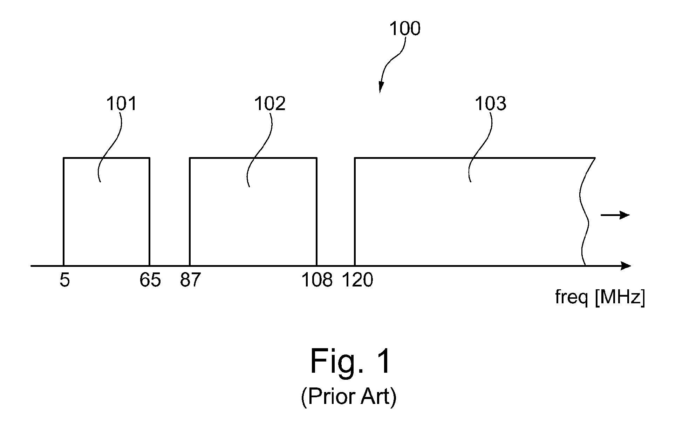

Fig. 1 shows a typical example 100 of three frequency bands, namely
101) 5-65 MHz for upstream data communication,
102) 87-108 MHz for FM radio downstream, and
103) above 120 MHz for TV and data communication downstream.

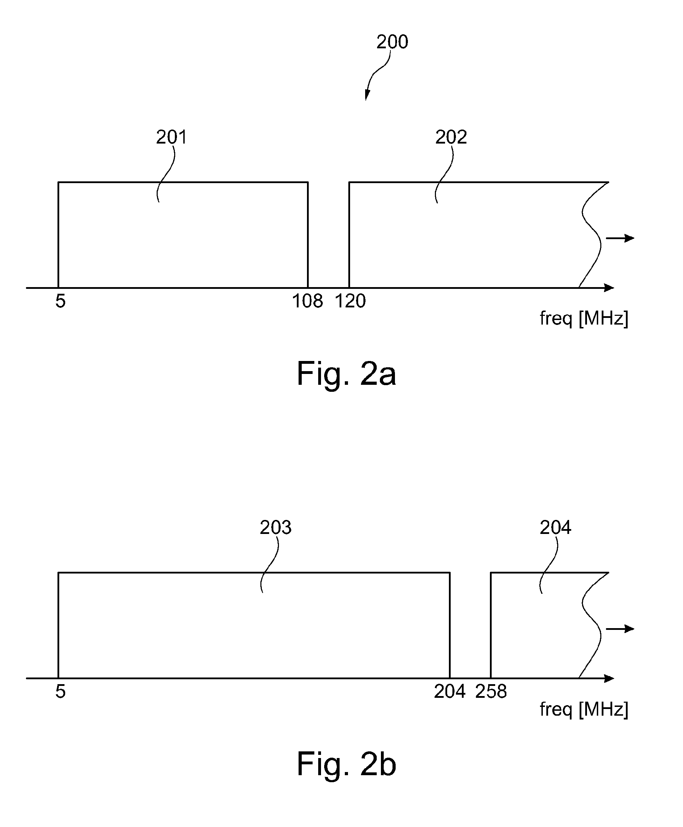

In order to increase the upstream bandwidth one possibility would be to convert at least part of the FM radio downstream band 102 to an upstream data communication band as illustrated in Fig. 2a, cf. reference numeral 201. This new upstream data communication band 201 covers the frequency band ranging from 5 MHz to 108 MHz at the expense of the previous FM radio band. Similar to Fig. 1 the downstream TV and data communication band 202 starts at 120 MHz and may reach up to 1800 MHz as defined by the Docsis 3.1. Alternatively, the new upstream bandwidth 203 may go as high as 204 MHz as indicated in Fig. 2b. In this embodiment the downstream TV and data communication band 204 starts at 258 MHz.

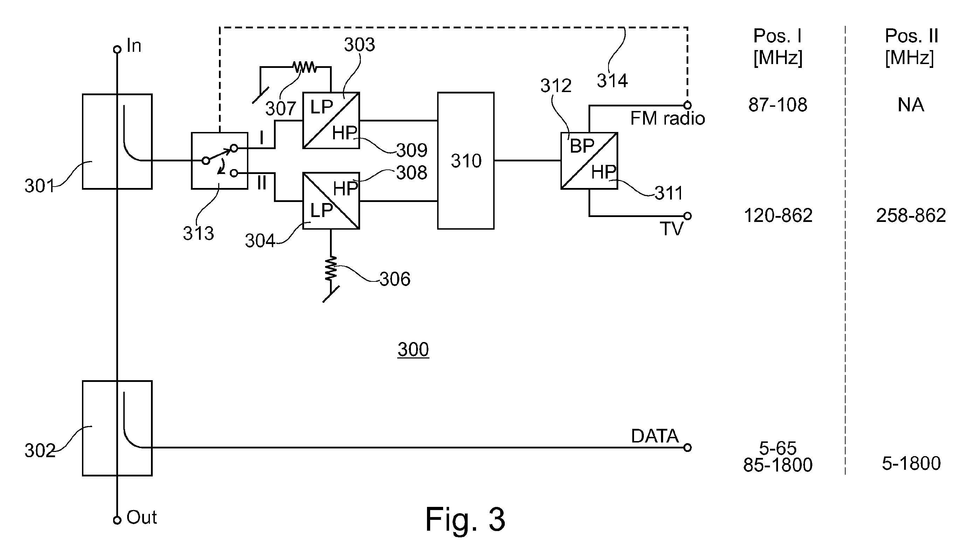

In terms of implementation an embodiment of the present invention 300 is depicted in Fig. 3 where two cascaded directional couplers 301 and 302 are inserted in the signal path between terminals "In" and "Out". The "In" terminal is adapted to receive incoming signals from for example another outlet socket being positioned in the upstream signal direction. Similarly, the "Out" terminal is adapted to output signals to for example another outlet socket being positioned in the downstream signal direction.

The directional coupled 301 has an additional output being operatively connected to a manually operable switch 313. The manually operable switch 313 may be positioned in one of two positions, namely I or II.

The manually operable switch 313 may in principle be any kind of switch, such as a slidable or a rotatable switch. Alternatively, the manually operable switch 313 may be in the form of an arrangement being incorporated in a connector or plug being adapted to be inserted into an output terminal otherwise being adapted to provide FM radio signals.

The directional coupler 302 also has an additional output in form of a data output being capable of handling data signals in the upstream and downstream directions.

In the embodiment shown in Fig. 3 the switch 313 can, as stated above, be positioned in one of two positions. In position I signals from the directional coupler 301 are led to the low-pass filter 303 and the high-pass filter 309. The low-pass filter has a cut-off frequency of around 65 MHz and the low-pass filtered signal is terminated in the signal terminator 307.

The high-pass filter 309 has a cut-off frequency of around 85 MHz, and the high-pass filtered signal is passed onto the splitter 310 and further onto the band-pass filter 312 before reaching the FM radio output plug. The band-pass filter 312 has a bandwidth of around 87-108 MHz. Similarly, signals are provided from the splitter 310 to the high-pass filter 311 before reaching the TV output plug. The high-pass filter 311 has a cut-off frequency of around 120 MHz.

Thus, when the manually operable switch 313 is in position I FM radio signals are provided between 87 and 108 MHz, TV signals are provided between 120 and 862 MHz and upstream/downstream data signals are provided within the full bandwidth from 5 MHz to 1800 MHz with sufficient isolation from the upstream data signal to the downstream FM radio and/or the TV signals.

If the manually operable switch 313 is switched to position II signals from the directional coupler 301 are led to the low-pass filter 304 and the high-pass filter 308. The low-pass filter 304 has a cut-off frequency of around 204 MHz, and the low-pass filtered signal is terminated in the signal terminator 307. The high-pass filter 308 has cut-off frequency of around 258 MHz, and the high-pass filtered signal is passed onto the splitter 310 and further onto the high-pass filter 311 before reaching the TV output plug. The high-pass filter 311 has no effect on the signal due to its cut-off frequency of around 120 MHz.

Due to the cut-off frequency of around 258 MHz of the high-pass filter 308 no signals below 258 MHz will be available on the TV output plug as frequencies between 5 MHz and 204 MHz are used for upstream data communication. Moreover, no signals will be available (NA) at the FM radio output plug, and the upstream data signals are well isolated from the downstream TV signals.

As indicated by the dotted line 314 the FM radio output plug may be used to control the switch 313. Thus, when for example a coaxial plug is inserted into the FM radio output plug the switch 313 may be operated and thereby switched from its upper to its lower position.

In conclusion, with the manually operable switch 313 in position II the FM radio band as well as a portion of the TV band is blocked whereby the bandwidth range 5-204 MHz may be used for other purposes, including an increased bandwidth for upstream data communication. It should be noted that the gap band between 204 MHz and 258 MHz is necessary in order to obtain sufficient isolation of the upstream data signals from the downstream FM radio and/or TV signals, cf. also Fig. 2b.

## Claims

1. An outlet socket adapted to provide signals in an upstream and a downstream direction, the outlet socket comprising a manually operable switch, wherein the manually operable switch, when in a first position, configures the outlet socket to provide a first upstream bandwidth, and wherein the manually operable switch, when in a second position, configures the outlet socket to provide a second upstream bandwidth, the second upstream bandwidth being increased relative to the first upstream bandwidth.

2. An outlet socket according to claim 1, wherein the increased second upstream bandwidth is provided by blocking at least a portion of the downstream bandwidth.

3. An outlet socket according to claim 2, wherein the blocked portion of the downstream bandwidth comprises at least portions of a FM radio band and/or a TV band.

4. An outlet socket according to any of claims 1-3, wherein the second upstream bandwidth comprises the 5-204 MHz band.

5. An outlet socket according to any of claims 1-4, wherein the manually operable switch comprises a mechanical switch, such as a slidable or a rotatable switch.

6. An outlet socket according to any of claims 1-4, wherein the manually operable switch comprises one or more moveable jumpers.

7. An outlet socket according to any of claims 1-4, wherein the manually operable switch is adapted to be controlled by an arrangement being incorporated in a connector or plug being adapted to be inserted into an output terminal of the outlet socket.

8. An outlet socket according to claim 7, wherein the output terminal of the outlet socket adapted to receive the connector or plug is otherwise adapted to provide FM radio signals.
